(19) Europäisches Patentamt

European Patent Office

Office européen des brevets

(11) Veröffentlichungsnummer: **0 499 787 A1**

# (12) EUROPÄISCHE PATENTANMELDUNG

(21) Anmeldenummer: **92100554.2**

(22) Anmeldetag: **15.01.92**

(30) Priorität: **21.02.91 DE 4105353**

(43) Veröffentlichungstag der Anmeldung:
**26.08.92 Patentblatt 92/35**

(84) Benannte Vertragsstaaten:
**DE FR GB IT**

(51) Int. Cl.5: **F02M 41/12**, F16D 3/26

(71) Anmelder: **ROBERT BOSCH GMBH**
**Postfach 30 02 20**
**W-7000 Stuttgart 30(DE)**

(72) Erfinder: **Knoedl, Helmut, Dipl.-Ing.**
**Richard-Wagner-Strasse 9**
**W-7140 Ludwigsburg(DE)**

(54) **Kraftstoffeinspritzpumpe für Brennkraftmaschinen.**

㊗ Die Erfindung geht von einer Verteilereinspritzpumpe aus, bei der über eine Kreuzscheiben-Klauen-Verbindung das Antriebsmoment von einer Antriebswelle auf eine Hubnockenscheibe übertragen wird, wobei aufgrund der konstruktiv bedingten Ausnehmungen der Kreuzscheibe eine hohe Anfälligkeit gegenüber Dauerbrüchen besteht.

Diese Anfälligkeit wird bei gleichen äußeren Abmaßen dadurch vermieden, daß die Klauen (4) der Antriebswelle (2) und die Klauen (5) der Hubnockenscheibe (3) jeweils gemeinsam in eine Ausnehmung (6) der Mitnahmescheibe (1) eingreifen.

FIG. 1

FIG. 2

EP 0 499 787 A1

## Stand der Technik

Die Erfindung geht von einer Kraftstoffeinspritzpumpe für Brennkraftmaschinen nach der Gattung des Hauptanspruchs aus. Bei den bekannten Kraftstoffeinspritzpumpen dieser Art (Bosch-Technische Unterrichtung, Verteilereinspritzpumpe Typ VE, Seiten 8 bis 9) dient als Mitnahmeglied zwischen Antriebswelle und Hubnockenscheibe eine Kreuzscheibe in deren vier Ausnehmungen jeweils eine der Klauen von Hubnockenscheibe und Antriebswelle greifen. Ohne die Drehschlüssigkeit zu verlieren, kann die Hubnockenscheibe mit dem Pumpenkolben die erforderlichen Axialbewegungen ausführen, wobei die Kreuzscheibe je nach Auswirkung der Reibung teilweise mitgenommen wird. Eine derartige Kupplung muß möglichst spielfrei arbeiten, da die Drehlage der Antriebswelle der Einspritzpumpe der jeweiligen Drehlage der Kurbelwelle des Motors proportional ist und somit die Spritzvorgänge direkt beeinflußt werden. Bereits geringe Abweichungen in dieser vorbestimmten Zuordnungen führen zu einer ungenauen Steuerung der Einspritzmenge und somit zu einer Verschlechterung des Verbrennungsvorganges, zu erhöhtem Kraftstoffverbrauch und Schadstoffausstoß sowie zu höheren mechanischen Belastungen des Triebwerkes. Ein Nachteil der üblichen Kreuzscheiben ist die konstruktionsbedingte Anfälligkeit gegenüber Dauerbrüchen im kritischen beanspruchten Querschnitt. Dieser Querschnitt erstreckt sich über die kürzeste Verbindung von der Sohle einer Ausnehmung der Kreuzscheibe zur Sohle der benachbarten Ausnehmung, wobei die durch den rechtwinkligen Verlauf der Kantenflächen der Ausnehmungen verursachten hohen Kerbwirkungen die Bruchgefährdung dieses Querschnittes zusätzlich besonders erhöhen. Ursachen für die starken mechanischen Beanspruchungen an dieser Stelle sind vor allem die wechselnden Belastungen auf die krafteinleitenden Flächen, infolge der Saug- und Pumphübe des Kolbens. Um trotz dieser Gefährdung der üblichen Kreuzscheibenkonstruktion eine hohe Zuverlässigkeit und Dauerhaltbarkeit zu erreichen, ist es nötig, sie vom Materialquerschnitt her zu überdimensionieren.

## Vorteile der Erfindung

Die erfindungsgemäße Kraftstoffeinspritzpumpe mit den kennzeichnenden Merkmalen des Hauptanspruchs hat demgegenüber den Vorteil, daß bei gleichem Platzbedarf für die Klauen und die Mitnahmescheibe wesentlich höhere Antriebsmomente von der Antriebswelle auf die Hubnockenscheibe übertragen werden können. Dies wird möglich, da durch den gemeinsamen Eingriff von Antriebs- und Hubnockenscheibenklaue in je eine Ausnehmung, der Verbindungsquerschnitt zwischen den Ausnehmungen vergrößert wird, was mit der damit verbundenen Materialansammlung den bruchgefährdeten geringeren Verbindungsquerschnitt der üblichen Kreuzscheibe vermeidet. Die erfindungsgemäße Mitnahmescheibe weist somit, ohne eine Veränderung der äußeren Abmaße, einen etwa doppelt so großen beanspruchten kritischen Verbindungsquerschnitt auf, als die zur Zeit übliche Kreuzscheibe. Zudem vergrößert sich die Kontaktfläche zwischen Mitnahmescheibe und Klauen, wodurch auch die krafteinleitenden Flächen der Klauen größer werden und somit über eine vollständigere Materialausnutzung das zu übertragende Antriebsmoment erhöht werden kann. Neben der Vergrößerung des Verbindungsquerschnitts, bringt die Ausgestaltung nach Anspruch 3 in vorteilhafter Weise vor allem stumpfe Winkel der Kontaktflächen am Übergang der Ausnehmungen zum achsseitigen Boden in der Mitnahmescheibe. Infolge der erheblichen Verringerung der Kerbwirkung kommt es ebenfalls zu einer Verringerung der Gefahr eines Schadbruchs an dieser Stelle. Zu den Vorteilen der höheren Zuverlässigkeit bei gleichem Materialaufwand kommt der große konstruktive Spielraum, den dieser Art der Kupplungsscheibe zuläßt. So ist es z.B. möglich, unterschiedliche Klauenstärken ohne eine Änderung der Mitnahmescheibe zu realisieren. Weitere Vorteile und vorteilhafte Ausgestaltungen der Erfindung sind der nachfolgenden Beschreibung, der Zeichnung und den Ansprüchen entnehmbar.

## Zeichnung

Ein Ausführungsbeispiel des Gegenstandes der Erfindung ist in der Zeichnung dargestellt und wird nachfolgend näher beschrieben.

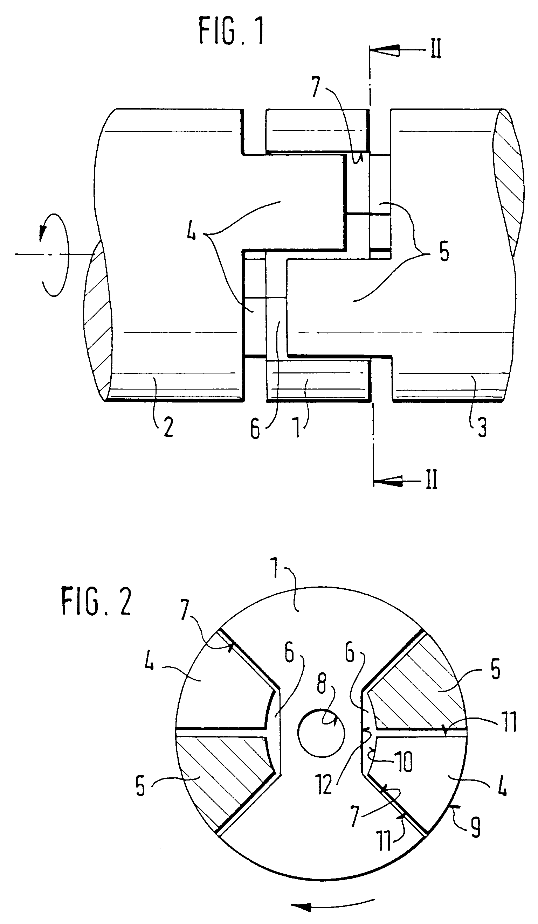

Es zeigen Figur 1 eine Seitenansicht der erfindungsgemäßen Kupplung und Figur 2 einen Schnitt durch die im Eingriff befindlichen Klauen der Hubnockenscheibe entlang des Mitnahmeglieds.

## Beschreibung des Ausführungsbeispiels

Die Figur 1 zeigt einen Ausschnitt aus einer Axialkolbenverteilereinspritzpumpe in der die erfindungsgemäße Verbindung zwischen einer Antriebswelle 2 und einer Hubnockenscheibe 3 dargestellt wird. Von der der Antriebswelle 2 axial gegenüberliegenden Stirnseite der Hubnockenscheibe 3 stehen zwei Klauen 5 und von der entsprechenden Stirnseite der Antriebswelle 2 zwei Klauen 4 axial vor. Diese haben eine prismatische segmentförmige Gestalt, wobei ihr kreisbogenförmiger Querschnitt durch eine Außenfläche 9 und eine Innenfläche 10 sowie auf Durchmessern liegende seitliche Begrenzungsflächen 11 beschrieben wird. Die Klauen liegen sich jeweils diametral gegenüber und greifen je gemeinsam in Umfangsrichtung zusammenliegend mit einer der axial gegenüberliegenden Klauen in eine Ausnehmung 6 in einer Mitnahmescheibe 1. Diese Mitnahmescheibe 1, besitzt im Zentrum eine Bohrung 8 und zwei sich diametral gegenüberliegende Ausnehmungen 6. Die in Umfangsrichtung liegenden Begrenzungsflächen 7 einer jeden dieser Ausnehmungen 6 liegen auf Durchmessern der Mitnahmescheibe 1 mit achsparalleler Erstreckung und rechtwinkling zueinander. An diese Begrenzungsflächen schließt sich in einem stumpfen Winkel eine ebene Bodenfläche 12 der Ausnehmung 6, wobei die Bodenflächen 12 beider Ausnehmungen 6 zueinander parallel sind. Die Begrenzungsflächen 7 der Ausnehmungen 6 der Mitnahmescheibe 1 und die daran angrenzenden seitlichen Begrenzungsflächen 11 der Klauen 4 oder 5 sind dabei in Umfangsrichtung der Ausnehmungen zueinander parallel. Über die Ausnehmungen 6 der Begrenzungsflächen 7 der Mitnahmescheibe 1 und die Begrenzungsflächen 11 der Klauen 4 und 5 wird die mechanische Verbindung zwischen der Antriebswelle 2 auf die Hubnockenscheibe 3 realisiert, wobei die Hubnockenscheibe 3 mit einem nicht dargestellten Pumpenkolben verbunden ist, der in der üblichen Form in einem Verteilerkopf geführt wird und einen Arbeitsraum und Verteilerbohrungen aufweist. Die Hubnockenscheibe 3 läuft auf einem ebenfalls nicht dargestellten Rollenring, der im Gehäuse gelagert ist und zusammen mit dem Drehantrieb der Nockenscheibe die Hubbewegung in axialer Richtung auslöst. Liegt an der Antriebswelle 2 ein Drehmoment an, wird es über die Klauen 4, die Mitnahmescheibe 1 und die Klauen 5 auf die Hubnockenscheibe 3 übertragen, wobei die Größe der jeweils parallelen kraftübertragenden Anlageflächen von Klauen 4 oder 5 und Mitnahmescheibe 1 von der durch die axiale Hubbewegung der Hubnockenscheibe 3 verursachten Eintauchtiefe der Klauen in die Ausnehmungen der Mitnahmescheibe abhängig ist. Im Betrieb wird mit den Klauen und der dazwischen liegenden Mitnahmescheibe eine kardanisch wirkende Kupplung realisiert. Die im rechten Winkel zueinander stehenden Begrenzungsflächen 7 der Ausnehmungen 6 und ein diametrales Spiel zwischen Klaueninnenflächen 10 und Bodenfläche 12 erlauben sowohl einen achsparallelen Versatz als auch einen Winkelversatz der Achsen von Antriebswelle und Hubnockenscheibe zueinander. Aufgrund dieses Achsversatzes und des Kardangelenkprinzips ist auch die Drehrichtung dieser Antriebsverbindung in der Weise vorgegeben, daß die Kraftübertragung immer über die Begrenzungsflächen 7 der Ausnehmungen 6 der Mitnahmescheibe 1 und die benachbarten Begrenzungsflächen 11 der Klauen 4 oder 5 erfolgen muß. Zudem läßt dies das nötige Fertigungsspiel der einzelnen Bauteile zu. Infolge des gemeinsamen Eingriffs von Antriebs- und Hubnockenscheibenklauen 4 und 5 in nur eine gemeinsame Ausnehmung ist es möglich, den Verbindungsquerschnitt zwischen den Ausnehmungen 6 zu vergrößern und damit bruchgefährdete geringe Belastungsquerschnitte zu vermeiden. Die stumpfen Winkel der Ausnehmungen 6 an den Begrenzungsflächen 7 reduzieren die Kerbwirkungen an dieser Stelle gegenüber der bekannten Lösung, was wiederum eine höhere Belastbarkeit der Mitnahmescheibe 1 zuläßt, so daß die ständig wechselnde Beanspruchung gut aufgenommen werden kann. In der Figur 2, die die obenbeschriebene Antriebsverbindung im Schnitt zeigt, sind Abmessungen und Lage der Ausnehmungen 6, sowie der eingreifenden Klauen 4 und 5 dargestellt. Die Drehrichtung gemäß den obengenannten Ursachen ist in der Weise vorgegeben, daß die Krafteinleitung der Antriebsklauen 4 auf die Begrenzungsflächen 7 der Mitnahmescheibe 1 erfolgt.

**Patentansprüche**

1.  Kraftstoffeinspritzpumpe für Brennkraftmaschinen mit einem hin- und hergehenden und gleichzeitig rotierenden Pumpenkolben, mit einer mit dem Pumpenkolben dreh- und hubschlüssig verbundenen auf Rollen ablaufenden Hubnockenscheibe, mit einer axial fixierten Antriebswelle und mit einem über axiale, an den einander zugewandten Stirnseiten von Antriebswelle und Hubnockenscheibe axial vorstehende prismatische Mitnahmelemente, die gegeneinander versetzt in axiale Ausnehmungen eines zwischen Hubnockenscheibe und Stirnseite angeordneten scheibenförmigen Mitnahmeglieds eingreifen, dadurch gekennzeichnet, daß die Ausnehmungen des Mitnahmegliedes so gestaltet sind, daß je eine der Ausnehmungen zugleich je ein Mitnahmeelement der Hubnockenscheibe und der Stirnseite der Antriebswelle in Umfangsrichtung nebeneinanderliegend eingreifen.

2.  Kraftstoffeinspritzpumpe nach Anspruch 1 dadurch gekennzeichnet, daß die einander benachbarten Flächen der Mitnahmeelemente und die Flächen von Mitnahmeelement und Begrenzung durch das Mitnahmeglied in Umfangsrichtung der Ausnehmung zueinander parallel sind.

3.  Kraftstoffeinspritzpumpe nach Anspruch 1 oder 2 dadurch gekennzeichnet, daß die beiden Begrenzungsflächen einer jeden Ausnehmung auf Durchmessern des Mitnahmegliedes mit axparalleler Erstreckung und rechtwinklich zueinan-

der liegen.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 369 155 (ROBERT BOSCH GMBH) <br> * Spalte 2, Zeile 3 - Zeile 18; Anspruch 1; Abbildungen 1,2 * <br> --- | 1-3 | F02M41/12 <br> F16D3/26 |
| Y | US-A-4 392 635 (MUESSEL) <br> * Spalte 3, Zeile 17 - Spalte 4, Zeile 5; Abbildungen 1-3 * <br> --- | 1-3 | |
| A | GB-A-2 162 285 (ROBERT BOSCH GMBH) <br> * Seite 1, Zeile 61 - Zeile 93; Abbildungen 1,2 * | 1 | |
| | ----- | | **RECHERCHIERTE SACHGEBIETE (Int. Cl.5)** <br><br> F02M <br> F16D |

Der vorliegende Recherchenbericht wurde für alle Patentansprüche erstellt

| Recherchenort | Abschlußdatum der Recherche | Prüfer |
|---|---|---|
| DEN HAAG | 21 APRIL 1992 | FRIDEN C.M. |

EPO FORM 1503 03.82 (P0403)